# FASCICULE DE BREVET EUROPEEN

(11) **EP 3 431 681 B1**
(45) Date de publication et mention de la délivrance du brevet: **07.06.2023**
(21) Numéro de dépôt: 18183862.4
(22) Date de dépôt: 17.07.2018
(51) Int. Cl.: E04F 15/024, F16M 11/18, F16M 7/00, F16M 3/00

(54) **SYSTÈME DE PLANCHER, NOTAMMENT POUR MODULES TRANSPORTABLES**
BODENSYSTEM, INSBESONDERE FÜR TRANSPORTIERBARE MODULE
FLOOR SYSTEM, IN PARTICULAR FOR TRANSPORTABLE MODULES

(30) Priorité: 19.07.2017 FR 1756837
(43) Date de publication de la demande: 23.01.2019
(73) Titulaire: Behm, 57100 Thionville (FR)
(72) Inventeur: BEHM, Alain, 57100 Thionville (FR)
(74) Mandataire: Office Freylinger

(56) Documents cités:
- JP-A- S49 649
- JP-A- 2012 149 421

## Description

### Domaine technique

La présente invention concerne généralement le domaine des systèmes de plancher. La présente invention concerne plus particulièrement les systèmes de planchers surélevés utilisés dans des modules ou conteneurs transportables.

### Etat de la technique

On connait de nombreuses constructions modulaires telles que par exemple celles réalisées avec les modules Algeco (Marque déposée).

Ces modules, au gabarit routier, sont utilisés seuls ou assemblés, de manière temporaire ou définitive et sont couramment utilisés pour la réalisation de bâtiments provisoires, le plus souvent à usage professionnel tels que des bureaux de vente pour un programme immobilier, des stands d'exposition pour un événement particulier, un espace de réception, des bureaux provisoires lors de programmes de réhabilitation.

Dans un module, le plancher est communément réalisé en bois et recouvert d'un revêtement comme par exemple une moquette. Le plancher est soutenu par une ossature qui repose sur le sol, composée de profilés métalliques de type tubes à section rectangulaire. Plusieurs configurations des profilés de l'ossature sont possibles. Lorsqu'un utilisateur marche sur le plancher du module à une vitesse normale, des vibrations sont transmises sur toute la surface du plancher. Le phénomène est encore amplifié quand plusieurs personnes passent simultanément sur le plancher, ce qui peut être fréquent pour des modulaires utilisés dans les aménagements d'évènements publics.

Ces vibrations du plancher peuvent se révéler problématiques lorsque des équipements sensibles aux vibrations sont installés dans le module, les vibrations dues au passage se transmettant à l'équipement et risquant de perturber son fonctionnement.

Dans les régions sujettes à de fortes activités sismiques on a proposé pour des planchers surélevés de bâtiments, d'ancrer les appareils sensibles directement dans la dalle en béton, à travers les dalles de plancher. De tels systèmes, décrits dans le JP 2012 149421 ou JP S49 649, ne sont pas appropriés dans le contexte de modules transportables, généralement installés sur de la terre ou des graviers, dans des chantiers ou dans les champs.

### Objet de l'invention

L'objet de la présente invention est de proposer une solution de système de plancher type surélevé, adaptés aux modules de construction, permettant l'installation d'équipements sensibles aux vibrations et permettant de limiter l'influence des vibrations du plancher sur ces équipements.

### Description générale de l'invention

La présente invention a été développée en lien avec une problématique particulière dans le domaine du contrôle de sécurité. L'importance croissante du sujet de la sécurité des personnes dans les lieus publics nécessite de procéder à des contrôles de sécurités dans divers contextes.

Classiquement, les aéroports, bâtiments publics (musées, salles de congrès etc.) sont équipés de portiques détecteurs de métaux. Les portiques détecteurs sont bien adaptés pour un usage intérieur.

En extérieur, le contrôle des personnes se fait souvent au niveau d'un point d'entrée d'une clôture ou d'un mur d'enceinte. Le contrôle de sécurité est alors souvent visuel (ouverture de sacs et manteaux) et un gardien procède à un contrôle à l'aide d'un détecteur de métaux manuel.

Dans ce contexte, le présent demandeur a eu l'idée de concevoir des modules ou conteneurs en tant que postes de contrôle équipés de portiques détecteurs de métaux. Un tel module - poste de contrôle, au gabarit routier, est facilement transportable et peut être installé sur tout site d'installation, en ville ou dans des champs.

Dans l'élaboration de ces modules, une problématique qui s'est posée est celle des vibrations du plancher générées par le passage des personnes dans le module. Ces fortes vibrations du plancher sont transmises au portique détecteur de métaux et perturbent son fonctionnement (faux positifs - le détecteur sonne en l'absence d'objets métalliques). Ce comportement n'est pas lié à la configuration particulière de la structure d'ossature du conteneur (structure métallique) et rend le portique incapable d'une détection fiable du passage d'un objet métallique.

La présente invention vise donc à fournir un système de plancher utilisable dans un module (de construction modulaire) et permettant d'éviter la transmission de vibrations à des équipements sensibles installés dans le modulaire.

La présente invention concerne un système de plancher selon la revendication 1 et un module selon la revendication 12, respectivement 13.

La présente invention propose un système de plancher comprenant une structure support liée au sol. Un plancher est monté sur la structure support et surélevé par rapport au sol. Le plancher est conçu pour supporter le passage de personnes et un ou plusieurs équipements.

Selon l'invention, le système de plancher comprend au moins un dispositif de stabilisation pour un équipement au-dessus du plancher, ledit dispositif comprenant : un support apte à être lié à l'équipement ; et un moyen élévateur associé au support. Le moyen élévateur est configuré pour se déployer au travers d'une ouverture dans le plancher jusqu'à prendre appui sur le sol, puis à déplacer vers le haut le support. Le moyen élévateur est ainsi configuré pour déplacer le support entre :
une position de repos dans laquelle l'équipement est relié au plancher ; et
une position de travail au-dessus du plancher, dans laquelle le moyen élévateur est déployé et s'appuie sur le sol, de manière à ce que l'équipement soit détaché du plancher afin d'éviter la transmission de vibrations par le plancher à l'équipement.

En position de repos, qui est en général une position rétractée ou compacte du dispositif de stabilisation, l'équipement repose sur le plancher, soit directement soit indirectement, selon la conception du support. Le support peut prendre différentes formes, sa fonction principale étant de fournir une liaison apte à supporter l'équipement au-dessus du plancher dans la position de travail, tout en étant liée au moyen élévateur. Le support peut par exemple comprendre un plateau, qui reçoit un pied ou une partie inférieure de l'équipement à supporter, et dont une extrémité coopère avec le moyen de liaison. Mais le support pourrait également être réalisé comme une bride dans un plan sensiblement vertical, bride à laquelle on vient fixer l'équipement à stabiliser. Selon les variantes, le support comprend un plateau support pour l'équipement, reposant sur la surface supérieure du plancher en position de repos, en particulier dans une surface de positionnement.

En position de travail, le dispositif de stabilisation permet de supporter l'équipement hissé au-dessus du plancher en prenant appui directement sur le sol en dessous du plancher. L'équipement ne reposant pas sur le plancher, les vibrations du plancher dues au passage des personnes ne seront pas transmises à l'équipement.

En outre, comme dans la position de travail le moyen élévateur s'appuie sur le sol, on obtient des réalisations avantageuses dans lesquelles aucun élément du dispositif de stabilisation n'est en contact avec le plancher. Comme le dispositif de stabilisation est ainsi désolidarisé du plancher, il est manifeste qu'il est isolé des vibrations du plancher, et donc également l'équipement supporté.

L'invention propose ainsi un dispositif de stabilisation qui est associé au plancher en ce sens que si le module comprenant le plancher est déplacé, le dispositif de stabilisation suit. Ainsi, le moyen élévateur prend appui sur le sol, mais n'y est pas fixé. Le dispositif de stabilisation est déployable de sorte que son extension dans l'espace se modifie lors de son déploiement. Le dispositif de stabilisation (respectivement le moyen élévateur) peut prendre une configuration rétractée (généralement pour le transport) qui correspond typiquement à la position de repos du support. Le moyen élévateur étant rétracté, il n'est normalement pas en contact avec le sol et n'est, surtout, pas ancré dans le sol. Ainsi en position rétractée, le moyen élévateur a, sous le plancher, une extension verticale qui est inférieure à la hauteur de la structure support.

Quand le moyen élévateur est actionné, il va se déployer vers le dessous du plancher pour prendre appui sur le sol puis déplacer le support vers le haut en position de travail - sans que le moyen élévateur ne soit fixé au sol.

Pour ce faire, le dispositif de stabilisation comprend un moyen d'entrainement, qui peut être mécanique ou assisté électriquement, pour commander le déploiement du moyen élévateur. Le moyen d'entrainement est donc configuré pour opérer le déploiement du moyen élévateur depuis une configuration compacte vers une configuration déployée appuyée sur le sol et jusqu'à la position de travail, et inversement.

En pratique, un équipement est affecté à une zone de positionnement sur le plancher, et une pluralité de pieds de stabilisation sont montés dans le plancher de sorte à pouvoir coopérer avec l'équipement installé dans la zone de positionnement.

Selon une variante, le moyen élévateur comporte un pied avec une liaison hélicoïdale coopérant avec un coulisseau associé au support pour déplacer ce dernier entre la position de repos et ladite position de travail. Un moyen d'entrainement, de préférence un moteur électrique ou moto-réducteur, est couplé au pied pour l'entraîner en rotation. Préférablement, le plateau support est fixé au coulisseau et le pied est une tige filetée. Cette réalisation a l'avantage d'une conception mécanique simple et fiable. D'autres réalisations sont toutefois envisageables, notamment basées sur d'autres éléments élévateurs, par exemple un vérin électrique ou pneumatique, ou encore un système type cric-ciseau. L'homme du métier pourra en effet concevoir tout type de moyen élévateur apte à se déployer à travers l'ouverture du plancher afin de prendre appui dans le sol et surélever le support.

Un moyen de guidage est avantageusement prévu pour coopérer avec le moyen élévateur, il comprend : une colonne de guidage fixée sur le coulisseau et s'étendant parallèlement à la tige filetée ; et un élément de guidage solidaire du moyen d'entrainement et ayant une partie formant une liaison glissante sur la colonne de guidage.

De préférence, le dispositif de stabilisation comprend des moyens de détection de fin de course pour détecter la position de repos et la position de fonctionnement.

Pour permettre la mise en oeuvre du dispositif de stabilisation en cas de panne du motoréducteur ou d'absence de courant, le moyen d'entrainement comprend avantageusement un axe de sortie pour un entrainement par manivelle.

En pratique, un même équipement sera généralement supporté par plusieurs dispositifs de stabilisation, pour des raisons d'équilibre. Une partie des dispositifs de stabilisation peuvent alors être solidarisés via leurs supports respectifs, formant un support commun. Cela permet de supporter une même région d'un équipement avec plusieurs moyens élévateurs. La force d'élévation peut ainsi être augmentée pour supporter des équipements lourds. Cela permet aussi de réduire l'encombrement des dispositifs de stabilisation.

Pour un équipement à base rectangulaire, on pourra prévoir deux paires de dispositifs de stabilisation, disposés de sorte à supporter l'équipement par des côtés opposés. Dans ce contexte, les deux dispositifs de stabilisation du même côté sont actionnés conjointement, et sont de préférence liés rigidement (solidarisés) par leurs supports respectifs.

De préférence, la tige est de longueur supérieure à la hauteur du plancher (en pratique, distance plancher-sol ou hauteur de la structure support). Ainsi la tige seule peut être déployée à travers le plancher. Avantageusement, le moyen élévateur comporte un embout rotulant destiné à être en contact avec le sol. Le moyen élévateur peut ainsi s'adapter à divers types de surfaces du sol et offre plus de stabilité au système.

Dans des modes de réalisation de l'invention, l'ouverture du plancher comporte une plaque d'étanchéité fixée sous le plancher de manière à assurer la fermeture de l'ouverture, la plaque d'étanchéité comportant une ouverture pour la tige filetée. La plaque limite le passage de poussières ou de liquides vers la partie supérieure du plancher.

Le système de plancher selon l'invention a été particulièrement développé pour une mise en oeuvre dans des conteneurs ou modules de constructions modulaires, mais peut trouver application dans divers types de planchers surélevés. On pourra donc également appliquer l'invention pour des systèmes de plancher surélevés de bureaux ou de bâtiments, lorsqu'on souhaite pouvoir supporter des équipements de manière isolée du sol.

Le nombre de pieds de stabilisation est adapté en fonction de l'équipement à supporter, notamment suivant sa géométrie et son poids.

Selon un autre aspect, l'invention concerne un module (pour construction modulaire) comprenant le présent système de plancher et en particulier au moins un équipement associé à une pluralité de dispositifs de stabilisation. Selon encore un autre aspect, l'invention concerne un module comprenant le présent système de plancher et au moins un portique de détection de métaux avec deux panneaux, chaque panneau du portique étant supporté par deux dispositifs de stabilisation ayant leurs supports rigidement liés.

Un tel module peut donc être facilement transporté et installé sur le site d'une manifestation, posé sur un sol bétonné ou naturel (préparé ou non, ex. terre battue, champ, etc.) voir même dans un hangar ou une halle d'exposition. Une fois les dispositifs de stabilisation déployés et donc les supports mis en position de travail, les équipements supportés sont isolés des vibrations dues au passage sur le plancher. Il est donc possible de livrer des modules/conteneurs équipés de portiques détecteurs de métaux (montés sur les pieds stabilisateurs) pour servir de points de contrôle d'accès, tout en garantissant un fonctionnement nominal malgré le passage du public.

### Description détaillée à l'aide des figures

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
Figure 1 : une vue de face d'un module comportant un portique détecteur de métaux installé avec un système de plancher selon un mode de réalisation de l'invention ;
Figure 2 : une vue en coupe selon le plan 2-2 de la figure 1 ;
Figure 3 : une vue de face en détails du dispositif de stabilisation du système de la figure 1, en coupe suivant un plan parallèle à un mur latéral du portique et passant par une tige filetée du dispositif ;
Figure 4 : une vue en coupe selon un plan 4-4 de la figure 3 ;
Figure 5 : une vue de face du panneau du portique comportant deux dispositifs de stabilisation en configuration de repos (correspond à un détail de la figure 2) ;
Figure 6 : une vue de face illustrant une position intermédiaire des dispositifs de stabilisation ;
Figure 7 : une vue en coupe d'un dispositif de stabilisation dans la position intermédiaire correspondant à la Fig.6 ;
Figure 8 : une vue de face illustrant lessupports en position de travail ;
Figure 9 : une vue en coupe du dispositif de stabilisation dans la position de travail correspondant à la Fig.8 ;
Figure 10 : une vue en perspective du dispositif de stabilisation tel que monté dans le plancher ;
Figure 11 : une vue en perspective d'une réalisation de module équipé de trois portiques de détection.

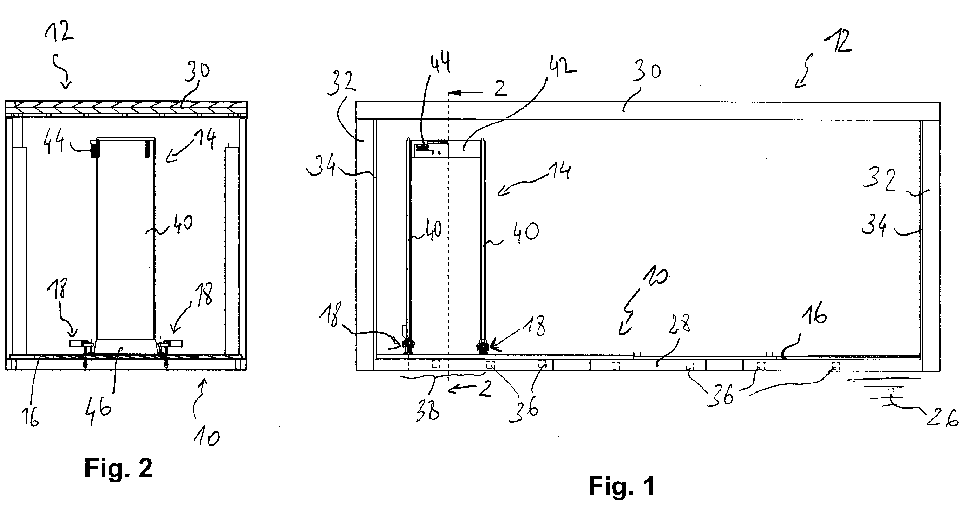

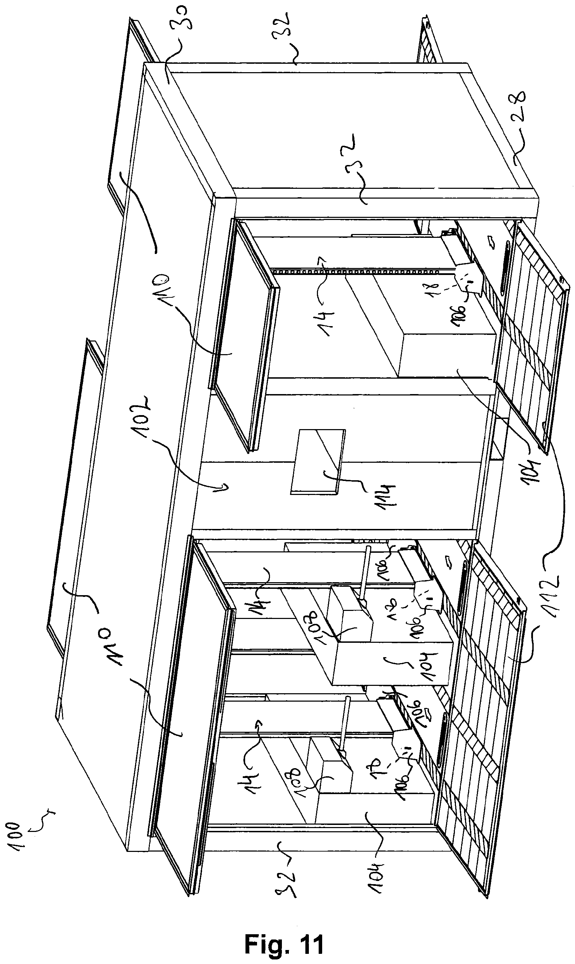

Un système de plancher 10 selon un mode de réalisation de l'invention sera décrit dans une application concernant un module ou conteneur de construction modulaire destiné à servir comme poste de contrôle d'accès. Aux figures 1 et 2, le système de plancher 10 est monté dans un module 12 équipé d'un portique 14 détecteur de métaux. En pratique, on pourra installer plusieurs portiques détecteurs de métaux (voir par ex. variante de la Fig.11), selon les besoins, ainsi que d'autres équipements.

Le portique 14 détecteur de métaux (ci-après également appelé simplement 'portique') est supporté sur un plancher 16 du module 12 (monté sur un cadre de base) par quatre dispositifs de stabilisation 18 identiques.

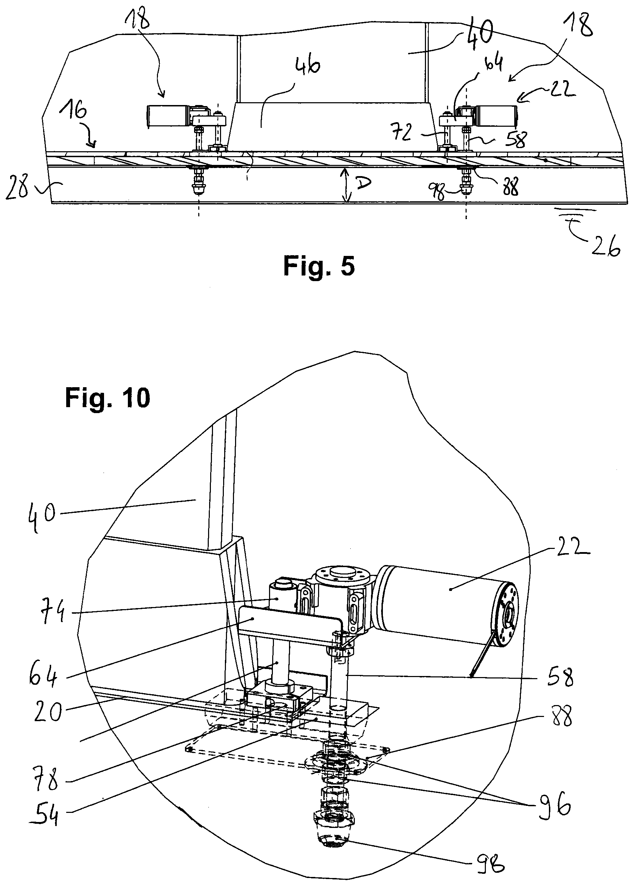

Comme on le voit mieux en figure 10, chaque dispositif de stabilisation 18 comprend un support 20 apte à être lié au portique 14, et un moyen élévateur 22 associé au support 20. Le moyen élévateur 22 est configuré pour se déployer au travers d'une ouverture 24 dans le plancher 16 jusqu'à prendre appui sur le sol 26 sous le plancher 16 et déplacer le support 20 vers le haut afin de l'amener dans une position de travail. Le moyen élévateur 22 permet donc de déplacer le support 20 entre une position de repos dans laquelle le portique 14 est relié au plancher 16, et une position de fonctionnement dans laquelle le moyen élévateur 22 est surélevé par rapport au plancher et donc détaché de celui-ci, afin d'éviter la transmission de vibrations par le plancher 16 au portique 14.

Ainsi lorsque les dispositifs de stabilisation 18 sont en position de travail, le portique se trouve surélevé par rapport au plancher 16. Les vibrations du plancher 16, dues au passage des personnes, ne sont donc pas transmises au portique 14. En outre, en position de travail, les dispositifs de stabilisation 18 ne sont pas solidaires du plancher 16. Le portique 14 est donc supporté de manière stable par les dispositifs de stabilisation 18 qui s'appuient directement dans le sol, et se trouve par conséquent isolé des vibrations du plancher 16, permettant un fonctionnement nominal.

Dans cette variante, le module 12 est de forme générale parallélépipédique à base rectangle. Le module 12 comporte ainsi une structure support 28 qui définit une base via laquelle le modulaire 12 repose sur le sol, typiquement un cadre rectangulaire mécanosoudé à base de tronçons tubulaires (deux longerons et deux traverses).. En partie supérieure se trouve un plafond 30 avec également un cadre rectangulaire assemblé (deux longerons et deux traverses), lequel est relié au cadre de base par quatre poteaux de liaison 32.

De manière générale, les cadres de base et de plafond, et les poteaux 32 sont réalisés avec des tronçons de profilés métalliques, par exemple de section rectangulaire.

Pignons sont typiquement fermés par des panneaux 34.

Pour le soutien du plancher 16, la structure support 28 comporte en outre une pluralité de solives métalliques (profilés en acier - section en I ou section rectangulaire) s'étendant entre deux côtés opposés (généralement entre les longerons) avec un entraxe prédéfini. Quelques solives sont indiquées en pointillés, désignées 36. C'est par la structure support 28 que le module 12 repose sur le sol 26 après son installation.

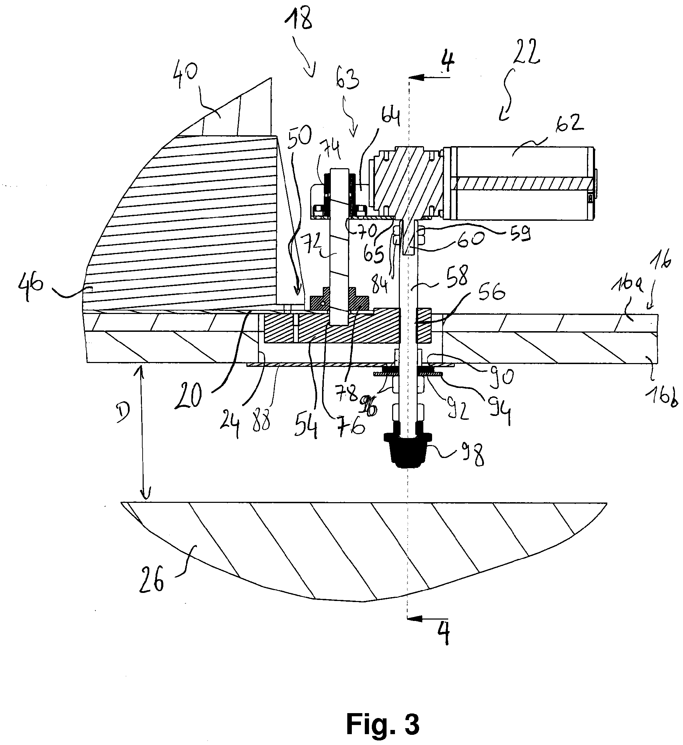

La structure support 28 est couverte à l'intérieur du modulaire 12 par le plancher 16, de préférence en bois, qui peut être composé de plusieurs lames ou plaques assemblées pour couvrir toute la surface. Comme montré à la figure 3, le plancher 16 est composé de deux couches superposées : une couche supérieure 16a, et une couche inférieure 16b. Le plancher 16 comprend une surface supérieure, dont une portion est appelée surface de positionnement 38 pour le portique 14 détecteur de métaux, c'est-à-dire la partie de la surface de plancher dans laquelle on dispose le portique 14 (ou plus généralement l'équipement). Comme on le comprendra, les dispositifs de stabilisation sont typiquement installés dans le plancher en fonction de la surface occupée sur le plancher par l'équipement. Dans nombre de cas, les dispositifs seront donc disposés à la périphérie de la surface de positionnement 38.

Dans cette application, le portique 14 a une configuration conventionnelle de portique à panneaux. Il comprend classiquement deux panneaux 40 parallèles disposés face-à-face et définissant un espace de passage. Les panneaux 40 s'étendent verticalement et sont maintenus ensemble en partie supérieure par deux traverses 42. Les panneaux 40 renferment des moyens de génération de champs magnétiques et un ensemble de capteurs, commandés par un module de commande 44 comportant un bandeau de commande et un afficheur.

Chaque panneau 40 du portique 14 est supporté par une paire de dispositifs de stabilisation 18, de préférence liés via les supports 20. Ici les dispositifs de stabilisation 18 sont disposés deux à deux dans la largeur des panneaux 40.

Les panneaux 40 comportent chacun une portion de base 46, ici légèrement évasée, qui est liée au support 20 du pied 18. La fixation entre la base 46 et le support 20 peut être réalisé par tout moyen adapté comme par exemple des vis.

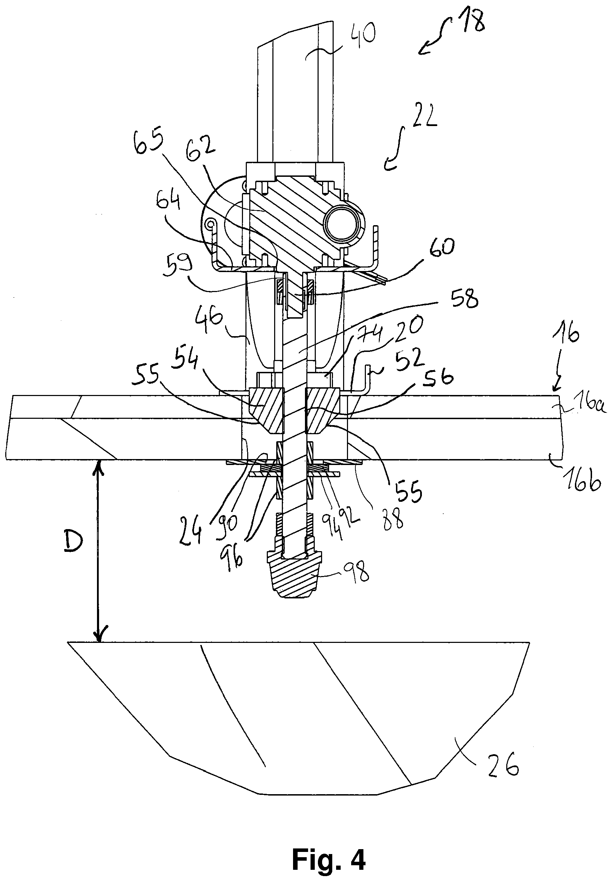

Un mode de réalisation du dispositif de stabilisation 18 sera maintenant décrit plus en détail en références aux figures 3 et 4.

Comme on l'aura compris, la fonction du support 20 est de supporter le portique 14, ou de manière générale un équipement, de sorte à pouvoir le hisser au-dessus du plancher 16 dans la position de travail. Dans la présente variante, le support 20 prend la forme d'une plaque métallique sur laquelle repose le panneau 40 du portique 14, on l'appellera donc aussi plaque support 20. Mais le support pourrait prendre d'autres formes ; il pourrait s'agir d'une plaque métallique plus courte, ou d'une bride dans un plan par exemple vertical contre laquelle on visse l'équipement destiné à être supporté par le dispositif de stabilisation.

Dans les figures 3 et 4, le support 20 du dispositif de stabilisation 18 est en position de repos : il repose sur la face supérieure du plancher 16 (typiquement dans la surface de positionnement 38). La plaque support 20 a une forme rectangulaire et s'étend transversalement par rapport au moyen élévateur 22. Pour une rigidité accrue, le support 20 comprend un rebord 52 perpendiculaire à la base rectangulaire de la plaque, qui permet également de caler la base 46 du portique. Pour le support 20, on pourra donc par exemple employer un profilé métallique (acier) standard, type cornière. De préférence, la base 46 est fixée sur la plaque support 20, par exemple par vissage ou collage ou tout autre moyen approprié.

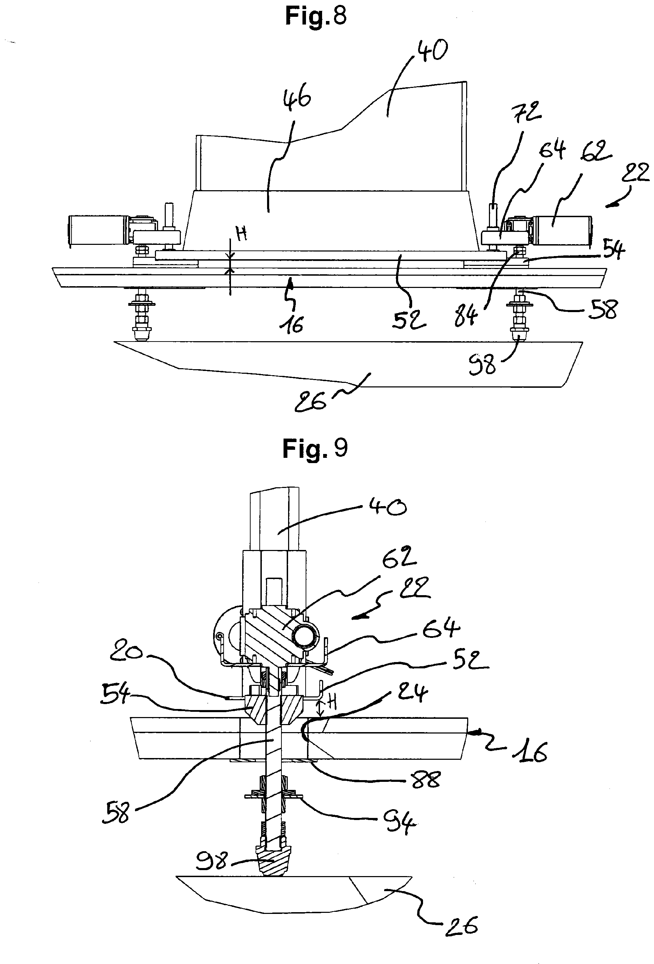

Comme on le verra mieux sur la Figure 5 ou 8, les supports 20 respectifs des deux dispositifs de stabilisation 18 placés sous un même montant 40 sont dans la présent variante solidaires. On peut donc utiliser une seule plaque métallique qui coopère à ses deux extrémités 50 avec les moyens élévateurs 22 respectifs des dispositifs de stabilisation 18.

L'extrémité 50 de la plaque support 20 est connectée au moyen élévateur 22 au niveau de l'ouverture 24 du plancher. L'ouverture 24 du plancher à ici la forme d'un trou oblong, traversant verticalement le plancher 16 (et traversant donc les plaques supérieure 16a et inférieure 16b).

Le moyen élévateur 22 comporte un coulisseau 54 coopérant avec une tige filetée 58 formant un pied rétractable. Le coulisseau 54 est une pièce pleine de forme générale rectangulaire. La partie d'extrémité 50 de la plaque support repose sur le coulisseau 54, auquel elle est fixée. Comme montré à la figure 3, le coulisseau 54 est, dans la position de repos du support 20, logé dans l'ouverture 24 du plancher. La partie inférieure du coulisseau 54 comporte deux chanfreins 55 qui facilitent l'introduction du coulisseau 54 dans l'ouverture 24.

Le signe de référence 56 désigne un trou taraudé 56 traversant verticalement le coulisseau 54 et réalisé dans une partie du coulisseau dépassant de la partie recevant l'extrémité 50 du support 20. La tige filetée 58 est insérée dans le trou taraudé 56 et les pas de vis respectifs sont adaptés pour coopérer.

La tige filetée 58 est couplée à son extrémité supérieure à un axe d'entrainement 60 d'un motoréducteur 62 (qui sera par exemple alimenté par batterie, groupe électrogène ou raccordé au secteur). La connexion entre la tige filetée 58 et l'axe d'entrainement 60 peut être réalisée par tout moyen. Dans la variante, l'axe d'entrainement 60 s'engage dans un logement d'extrémité 59 de la tige filetée 58 et une clavette (non montrée) est insérée à travers la tige filetée 58 et l'axe d'entrainement 60.

Un moyen de guidage 63 du motoréducteur 62 est prévu pour assister le mouvement de déplacement du coulisseau 54 sur la tige filetée 58. Le moyen de guidage 63 comporte un élément de guidage 64, ici un profilé métallique en U, sur lequel est fixé le motoréducteur 62. Notamment, l'axe d'entrainement 60 du motoréducteur traverse un orifice 65 prévu dans l'élément de guidage 64. L'élément de guidage 64 s'étend transversalement par rapport à la tige filetée 58, au-dessus du coulisseau 54.

L'élément de guidage 64 comprend un orifice 70 traversé par une colonne de guidage 72. Une bague de guidage 74 cylindrique est fixée sur l'élément de guidage 64, centrée sur l'orifice 70, pour faciliter le coulissement le long de la colonne 72.

La colonne de guidage 72 est quant à elle fixée sur le coulisseau 54, sa base étant encastrée dans un trou borgne 76. Comme on le voit, la colonne 72 traverse la plaque support 20 et sa base est maintenue par une bride 78 fixée au coulisseau 54.

La colonne de guidage 74 est une pièce cylindrique rigide (par ex. en acier) disposée verticalement sur le coulisseau 54, et donc parallèle à l'axe de la tige filetée 58. Un jeu de fonctionnement est prévu au niveau de la bague de guidage 74 pour permettre un déplacement relatif le long de la colonne 72.

La rotation dans un plan horizontal du motoréducteur 62 par rapport au coulisseau 54 est interdite par le système de liaisons entre le motoréducteur 62 et la colonne de guidage 72 via l'élément de guidage 74. Il en résulte que lors de l'activation du motoréducteur 62, la rotation de l'axe d'entrainement 60 entraine la rotation de la tige filetée 58 dans le trou taraudé 56 et la translation verticale par rapport au coulisseau 54, de l'ensemble composé par la tige filetée 58, le motoréducteur 62, et l'élément de guidage 64.

De préférence, des écrous de butée 84 montés sur la tige filetée 58 entre le motoréducteur 62 et le coulisseau 54 délimitent la course vers le bas de l'ensemble.

L'ouverture 24 du plancher est fermée vers le bas par une par une plaque d'étanchéité 88. La plaque d'étanchéité 88 est une plaque en matériau métallique ou plastique fixée à la face inférieure du plancher 16 (à la plaque inférieure 16b) par vissage, collage ou autre. Un orifice 90 est prévu pour le passage de la tige filetée 58, avec un jeu assez généreux pour éviter tout contact.

La tige filetée 58 comporte un joint 92 élastique d'étanchéité et une rondelle 94 métallique montés l'un contre l'autre et positionnés sur la longueur de la tige filetée 58 par une paire d'écrous 96. Le joint 92 et la rondelle 94 sont positionnés de sorte que dans la position de repos (donc tige filetée 58 rentrée), le joint 92 soit en contact avec la plaque d'étanchéité 88.

L'extrémité inférieure de la tige filetée 58 comporte aussi préférablement un pied rotulé 98 destiné à entrer en contact avec le sol 26. Le pied rotulé comporte a une forme d'embout en matière plastique monté serré autour de l'extrémité inférieure de la tige filetée 58.

Comme il a été décrit plus haut, le moyen élévateur 22 est configuré pour déplacer le support 20 entre une position de repos, et une position de travail, surélevée du plancher 16. Dans la suite de la description, le fonctionnement du système de plancher 10 sera expliqué en référence aux figures 5 à 9.

En se référant à la Fig.5, le modulaire 12 repose sur le sol 26, et le plancher 16 est surélevé par rapport au sol d'une distance D qui correspond à la hauteur des profilés en acier de la structure support 28. Comme on le voit, le panneau 40 du portique est associé à deux dispositifs de stabilisation 18. La base 46 du panneau repose sur les supports 20 des dispositifs 18, les supports 20 étant solidaires et formant une même plaque support s'étendant sous toute la largeur du panneau 40.

Les supports 20 sont en position de repos, c'est-à-dire qu'ils reposent sur le plancher 10. Les tiges filetées 58 des moyens élévateurs 22 sont dans une position maximale vers le haut et les pieds rotulés 98 ne sont pas en contact avec le sol 26. C'est la configuration illustrée aux Figs. 3 et 4. Cette configuration de repos et prévue pour le stockage et le transport. Les tiges filetées 58 sont rentrées de manière à fermer l'orifice 90 de la plaque d'étanchéité.

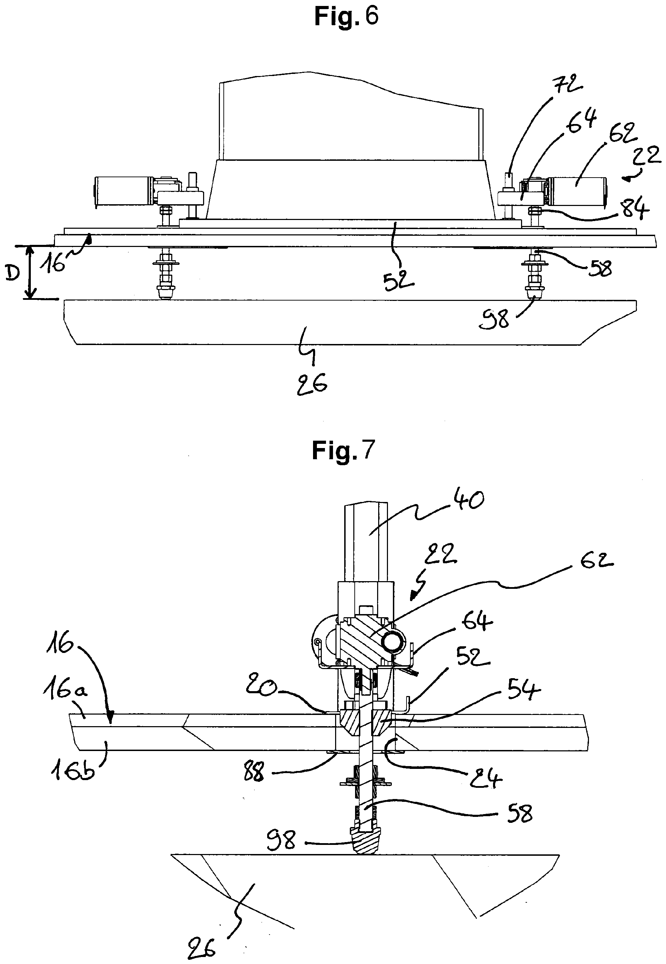

Une fois que le conteneur 12 est placé sur le site d'utilisation, le déploiement des dispositifs de stabilisation 18 s'opère de la manière suivante. Les motoréducteurs 62 sont alors activés, entraînant la rotation des tiges filetées 58 dans les trous taraudés 56 des coulisseaux 54 et la translation de celles-ci vers le bas relativement aux coulisseaux 54. Les tiges filetées 58 descendent jusqu'à ce que les pieds rotulés 98 arrivent en contact avec le sol 26. C'est la configuration de la Figure 6, dite 'intermédiaire', le détail du dispositif 18 étant mieux montré en Fig.7. Dans cette position, le support 20 repose toujours sur le plancher 16.

En continuant l'alimentation des motoréducteurs 62 à partir de la position intermédiaire, la rotation des tiges filetées va entrainer un mouvement ascendant du coulisseau, car la descente des tiges 58 n'est plus possible (bloquées contre le sol 26). Le mouvement ascendant des coulisseaux 54 entraine bien entendu les supports 20 et donc les panneaux du portique 14.

La Figure 8 représente une position de travail du support 20, dans laquelle le montant 40 est donc surélevé (d'une distance H) par rapport au plancher 16 grâce aux deux dispositifs de stabilisation. Les motoréducteurs 62 sont stoppés. On remarquera que dans cette position de travail, les plaques support 20 et les coulisseaux 54 ne sont plus en contact avec le plancher 16 ni avec l'ouverture 24. Comme on peut le voir, en position de travail aucun élément du dispositif 18 n'est lié au plancher 16. Le détail du dispositif 18 est illustré à la Fig. 9.

De préférence, la longueur des tiges filetées 58 est déterminée de manière à ce que la distance entre les pieds rotulés 98 et les écrous 84 de butée soit supérieure à la hauteur (D) des profilés en acier de la structure 28, en considération de la hauteur d'élévation H souhaitée.

En pratique, on actionne les dispositifs de stabilisation d'un premier panneau 40, puis ceux supportant le panneau 40 opposé. Mais on pourrait actionner les quatre ensemble.

En position de travail, le portique 14 est entièrement supporté par les dispositifs de stabilisation 18. De plus, aucun élément du dispositif de stabilisation 18 n'est en contact avec un élément du plancher 16. Ainsi, les vibrations potentielles du plancher 16 ne peuvent pas être transmises par contact au portique 14.

La figure 11 illustre une variante de module 100 dans lequel est monté un plancher conforme à l'invention et équipé de trois portiques de détection de métaux. La construction mécanosoudée de la structure métallique du module 100 est similaire à celle du module 12 et ne sera donc pas réexpliquée. On utilisera les mêmes signes de références que précédemment pour les éléments identiques ou similaires.

Le module 100 comprend donc une structure métallique support 28 et un toit 30 liés par quatre poteaux de liaison 32, tel que décrit précédemment. Les pignons sont fermés par des parois 34. Le toit 30 est également fermé par une paroi. La structure support 28 est couverte par un plancher 16.

Trois portiques 14 de détection de métaux sont installés dans le module. Le signe de référence 102 désigne une cabine séparant le module en deux parties, l'une accueillant deux portiques et l'autre un portique. Les portiques 14 sont disposés de sorte que le passage des personnes se fait selon la largeur du module. Les espaces sont comblés par des coffrets 104, de sorte que le passage ne puisse se faire qu'à travers les portiques.

Chaque portique 14 est associé à un ensemble de quatre dispositifs de stabilisation 18 qui vont permettre de les hisser en position de travail, évitant ainsi la transmission de vibrations. La conception des dispositifs de stabilisation 18 et leur montage dans le plancher, ainsi que le support des portiques 14, est similaire à ce qui a été présenté ci-dessus. Dans cette figure 11, la position de certains dispositifs de stabilisation est indiquée par leur signe de référence 18, mais ils ne sont pas visibles car cachés par un couvercle 106.

Un tourniquet 108 peut être installé avant chaque portique, ici monté sur les coffrets 104. La partie droite du module 100 peut être aménagée pour le passage de personnes à mobilité réduite, notamment en chaise roulante. Le portique 14 est alors un peu plus large, et on omettra le tourniquet.

Des panneaux latéraux supérieurs 110 et inférieurs 112 sont montés pivotants sur les côtés latéraux du cadre de toit 30 et du cadre support 28. Lorsqu'ils sont rabattus dans le plan vertical ils permettent de fermer le côté du module. Dans la configuration illustrée, les panneaux supérieurs 100 font office d'auvents. Les deux panneaux inférieurs 112 forment une rampe d'accès.

On notera encore que la cabine peut comprendre une ou plusieurs fenêtres 114 pour la surveillance. On pourra aussi prévoir dans le plafond du module une ou plusieurs caméras de surveillance (non montrées).

## Revendications

1. Système de plancher comprenant :
une structure support (28) liée au sol (26) ;
un plancher (16) monté sur ladite structure support et surélevé par rapport au sol ;
**caractérisé par** au moins un dispositif de stabilisation (18) pour un équipement (14) au-dessus du plancher (16) comprenant :
un support (20) apte à être lié audit équipement (14) ;
un moyen élévateur (22) associé audit support (20) ;
ledit moyen élévateur étant configuré pour déplacer ledit support entre :
une position de repos dans laquelle ledit équipement (14) est supporté par ledit plancher ; et
une position de travail dans laquelle ledit support (20) est surélevé du plancher, ledit moyen élévateur étant déployé au travers d'une ouverture (24) dans ledit plancher jusqu'à prendre appui sur le sol, puis déplacer le support (20) vers la position de travail, de manière à ce que ledit équipement (14) soit détaché dudit plancher afin d'éviter la transmission de vibrations par ledit plancher audit équipement,
dans lequel le moyen élévateur est déployable entre une configuration rétractée dans laquelle il n'est pas en contact avec le sol, correspondant à la position de repos du support, et une configuration déployée, dans laquelle il prend appui sur le sol et supporte le support en position de travail.

2. Système de plancher selon la revendication 1, dans lequel en position de travail, le dispositif de stabilisation (18) est désolidarisé du plancher (16).

3. Système de plancher selon la revendication 1 ou 2, dans lequel ledit moyen élévateur comprend un moyen d'entrainement pour opérer son déploiement depuis la configuration rétractée vers la configuration déployée, et inversement.

4. Système de plancher selon une quelconque des revendications précédentes, **caractérisé en ce que** ledit support (20) comprend un plateau support pour l'équipement, reposant sur la surface supérieure du plancher en position de repos, en particulier dans une surface de positionnement (38) ; et **en ce que** ledit plateau support (20) est surélevé de ladite surface supérieure, respectivement de positionnement, en position de travail.

5. Système de plancher selon l'une quelconque des revendications précédentes, **caractérisé en ce que** ledit moyen élévateur comporte un pied (58) avec une liaison hélicoïdale coopérant avec un coulisseau (54) associé audit support pour déplacer ce dernier entre ladite position de repos et ladite position de travail ; le moyen d'entrainement, de préférence un moteur électrique ou moto-réducteur (62), étant couplé audit pied pour entraîner en rotation ledit pied.

6. Système de plancher selon la revendication 5, **caractérisé en ce que** ledit plateau support (20) est fixé audit coulisseau (54) et ledit pied (58) est une tige filetée.

7. Système de plancher selon l'une des revendications 5 ou 6, **caractérisé par** un moyen de guidage (63) comprenant :
une colonne de guidage (72) fixée sur le coulisseau (54) et s'étendant parallèlement à la tige filetée (58) ; et
un élément de guidage (64) solidaire du moyen d'entrainement (62) et ayant une partie formant une liaison glissante sur la colonne de guidage (72).

8. Système de plancher selon l'une des revendications 3 à 7, **caractérisé en ce que** le moyen d'entrainement (62) comprend un axe de sortie pour un entrainement par manivelle.

9. Système de plancher selon l'une des revendications 5 à 7, **caractérisé en ce que** :
en position de repos, le support (20) repose sur le plancher (16) tandis que le coulisseau (54) est logé dans l'ouverture (24) du plancher et la tige filetée (58) n'est pas en contact avec le sol ;
dans une position intermédiaire, le support (20) repose sur le plancher tandis que le coulisseau (54) est logé dans l'ouverture (24) du plancher et la tige filetée (58) est en contact avec le sol ;
en position de travail, le support (20) est surélevé par rapport au plancher tandis que le coulisseau (54) est dégagé de l'ouverture (24) du plancher et la tige filetée (58) est en contact avec le sol.

10. Système de plancher selon la revendication 7 ou l'une des revendications dépendantes de la revendication 7, **caractérisé par** des moyens de détection de fin de course pour détecter la position de repos et la position de travail.

11. Système de plancher selon l'une des revendications 1 à 10, comprenant au moins deux dispositifs de stabilisation (18) solidarisés par leurs supports (20) respectifs pour supporter un équipement (14) ou une partie d'équipement (40), les au moins deux dispositifs de stabilisation étant opérables conjointement.

12. Module comprenant un système de plancher (10) selon l'une quelconque des revendications précédentes et en particulier au moins un équipement (14) associé à plusieurs dispositifs de stabilisation (18).

13. Module (12, 100) comprenant un système de plancher (10) selon l'une des revendications 1 à 11 et au moins un portique (14) de détection de métaux à deux panneaux (40), chaque panneau (40) dudit portique étant supporté par deux dispositifs de stabilisation (18) ayant leurs supports (20) respectifs rigidement liés.

## Patentansprüche

1. Bodensystem, umfassend:
eine Trägerstruktur (28), die mit dem Fußboden (26) verbunden ist;
einen Boden (16), der auf der Trägerstruktur montiert ist und in Bezug zu dem Fußboden erhöht ist;
**gekennzeichnet durch** wenigstens eine Stabilisierungsvorrichtung (18) für eine Einrichtung (14) oberhalb des Bodens (16), umfassend:
einen Träger (20), der mit der Einrichtung (14) verbindbar ist;
ein Hebemittel (22), das dem Träger (20) zugeordnet ist;
wobei das Hebemittel ausgebildet ist, um den Träger zu bewegen zwischen:
einer Ruhestellung, in der die Einrichtung (14) vom Boden gehalten wird; und
einer Arbeitsstellung, in welcher der Träger (20) vom Boden erhöht ist, wobei das Hebemittel durch eine Öffnung (24) in dem Boden hindurch ausgefahren wird, bis es auf dem Fußboden in Abstützung kommt und anschließend den Träger (20) in die Arbeitsstellung bewegt, derart, dass die Einrichtung (14) vom Boden gelöst ist, um die Übertragung von Vibrationen durch den Boden auf die Einrichtung zu vermeiden,
wobei das Hebemittel ausfahrbar ist zwischen einer eingefahrenen Konfiguration, in der es mit dem Fußboden nicht in Kontakt ist und die der Ruhestellung des Trägers entspricht, und einer ausgefahrenen Konfiguration, in der es auf dem Fußboden in Abstützung kommt und den Träger in Arbeitsstellung hält.

2. Bodensystem nach Anspruch 1, wobei, in Arbeitsstellung, die Stabilisierungsvorrichtung (18) von dem Boden (16) gelöst ist.

3. Bodensystem nach Anspruch 1 oder 2, wobei das Hebemittel ein Antriebsmittel umfasst, um dessen Ausfahren aus der eingefahrenen Konfiguration in die ausgefahrene Konfiguration durchzuführen, und umgekehrt.

4. Bodensystem nach einem der vorhergehenden Ansprüche, **dadurch gekennzeichnet, dass** der Träger (20) eine Trägerplatte für die Einrichtung umfasst, die auf der oberen Fläche des Bodens in Ruhestellung aufliegt, insbesondere in einer Positionierungsfläche (38); und dadurch, dass die Trägerplatte (20) von der oberen Fläche, beziehungsweise Positionierungsfläche, in Arbeitsstellung erhöht ist.

5. Bodensystem nach einem der vorhergehenden Ansprüche, **dadurch gekennzeichnet, dass** das Hebemittel einen Fuß (58) mit einer schraubenförmigen Verbindung aufweist, die mit einem Schiebeelement (54) zusammenwirkt, das dem Träger zugeordnet ist, um diesen letzten zwischen der Ruhestellung und der Arbeitsstellung zu bewegen; wobei das Antriebsmittel, bevorzugt ein Elekromotor oder ein Getriebemotor (62), mit dem Fuß gekoppelt ist, um den Fuß zur Drehung anzutreiben.

6. Bodensystem nach Anspruch 5, **dadurch gekennzeichnet, dass** die Trägerplatte (20) an dem Schiebeelement (54) befestigt ist und der Fuß (58) eine Gewindestange ist.

7. Bodensystem nach einem der Ansprüche 5 oder 6, **gekennzeichnet durch** ein Führungsmittel (63), umfassend:
eine Führungssäule (72), die auf dem Schiebeelement (54) befestigt ist und sich parallel zu der Gewindestange (58) erstreckt; und
ein Führungselement (64), das fest mit dem Antriebsmittel (62) verbunden ist und einen Teil aufweist, der eine Gleitverbindung auf der Führungssäule (72) bildet.

8. Bodensystem nach einem der Ansprüche 3 bis 7, **dadurch gekennzeichnet, dass** das Antriebsmittel (62) eine Abtriebsachse für einen Kurbelantrieb umfasst.

9. Bodensystem nach einem der Ansprüche 5 bis 7, **dadurch gekennzeichnet, dass**:
in Ruhestellung, der Träger (20) auf dem Boden (16) aufliegt, während das Schiebeelement (54) in der Öffnung (24) des Bodens aufgenommen ist und die Gewindestange (58) mit dem Fußboden nicht in Kontakt ist;
in einer Zwischenstellung, der Träger (20) auf dem Boden aufliegt, während das Schiebeelement (54) in der Öffnung (24) des Bodens aufgenommen ist und die Gewindestange (58) mit dem Fußboden in Kontakt ist;
in Arbeitsstellung, der Träger (20) in Bezug auf den Boden erhöht ist,
während das Schiebeelement (54) von der Öffnung (24) des Bodens freigegeben ist und die Gewindestange (58) mit dem Fußboden in Kontakt ist.

10. Bodensystem nach Anspruch 7 oder einem der von Anspruch 7 abhängigen Ansprüche, **gekennzeichnet durch** Mittel zum Detektieren der Endstellung, um die Ruhestellung und die Arbeitsstellung zu detektieren.

11. Bodensystem nach einem der Ansprüche 1 bis 10, umfassend wenigstens zwei Stabilisierungsvorrichtungen (18), die durch ihre jeweiligen Träger (20) fest verbunden sind, um eine Einrichtung (14) oder einen Einrichtungsteil (40) zu halten, wobei die wenigstens zwei Stabilisierungsvorrichtungen gemeinsam betätigbar sind.

12. Modul, umfassend ein Bodensystem (10) nach einem der vorhergehenden Ansprüche und insbesondere wenigstens eine Einrichtung (14), die mehreren Stabilisierungsvorrichtungen (18) zugeordnet ist.

13. Modul (12, 100), umfassend ein Bodensystem (10) nach einem der Ansprüche 1 bis 11 und wenigstens ein Metalldetektor-Portal (14) mit zwei Tafeln (40), wobei jede Tafel (40) des Portals von zwei Stabilisierungsvorrichtungen (18) gehalten wird, deren jeweilige Träger (20) starr verbunden sind.

## Claims

1. A floor system comprising:
a support structure (28) connected to the ground (26);
a floor (16) mounted on said support structure and raised relative to the ground;
**characterised by** at least one stabilising device (18) for an item of equipment (14) above the floor (16) comprising:
a support (20) capable of being connected to said item of equipment (14);
a lifting means (22) associated with said support (20);
said lifting means being configured to displace said support between:
a resting position in which said item of equipment (14) is supported by said floor; and
a working position in which said support (20) is raised from the floor, said lifting means being deployed through an opening (24) in said floor until it rests on the ground and then displaces the support (20) towards the working position, such that said item of equipment (14) is detached from said floor in order to avoid the transmission of vibrations by said floor to said item of equipment,
in which the lifting means is deployable between a retracted configuration in which it is not in contact with the ground, corresponding to the resting position of the support, and a deployed configuration in which it rests on the ground and supports the support in the working position.

2. A floor system according to claim 1, in which, in the working position, the stabilising device (18) is detached from the floor (16).

3. A floor system according to claim 1 or 2, in which said lifting means comprises a drive means for effecting the deployment thereof from the retracted configuration towards the deployed configuration, and *vice versa.*

4. A floor system according to any one of the preceding claims, **characterised in that** said support (20) comprises a support plate for the item of equipment, which plate rests on the upper surface of the floor in the resting position, in particular in a positioning surface (38); and **in that**, in the working position, said support plate (20) is raised from said upper, respectively, positioning surface.

5. A floor system according to any one of preceding claims, **characterised in that** said lifting means comprises a foot (58) with a helicoidal link which cooperates with a slideway (54) associated with said support for displacing the latter between said resting position and said working position, the drive means, preferably an electric motor or geared motor (62), being coupled with said foot to drive said foot in rotation.

6. A floor system according to claim 5, **characterised in that** said support plate (20) is fastened to said slideway (54) and said foot (58) is a threaded rod.

7. A floor system according to one of claims 5 or 6, **characterised by** a guide means (63) comprising:
a guide column (72) fastened to the slideway (54) and extending parallel to the threaded rod (58); and
a guide element (64) integral with the drive means (62) and having a part forming a sliding link on the guide column (72).

8. A floor system according to one of claims 3 to 7, **characterised in that** the drive means (62) comprises an output shaft for crank drive.

9. A floor system according to one of claims 5 to 7, **characterised in that**:
in the resting position, the support (20) rests on the floor (16) while the slideway (54) is accommodated in the floor opening (24) and the threaded rod (58) is not in contact with the ground;
in an intermediate position, the support (20) rests on the floor while the slideway (54) is accommodated in the floor opening (24) and the threaded rod (58) is in contact with the ground;
in the working position, the support (20) is raised relative to the floor while the slideway (54) is clear from the floor opening (24) and the threaded rod (58) is in contact with the ground.

10. A floor system according to claim 7 or one of the claims dependent on claim 7, **characterised by** end-of-travel detection means for detecting the resting position and the working position.

11. A floor system according to one of claims 1 to 10 comprising at least two stabilising devices (18) joined by their respective supports (20) for supporting an item of equipment (14) or part (40) of an item of equipment, the at least two stabilising devices being jointly operable.

12. A module comprising a floor system (10) according to any one of the preceding claims and in particular at least one item of equipment (14) associated with a plurality of stabilising devices (18).

13. A module (12, 100) comprising a floor system (10) according to one of claims 1 to 11 and at least one metal detection gantry (14) with two panels (40), each panel (40) of said gantry being supported by two stabilising devices (18) with their respective supports (20) rigidly connected.
